# EUROPEAN PATENT APPLICATION

(11) **EP 2 261 123 A2**
(43) Date of publication of application: **15.12.2010**
(21) Application number: 10165049.7
(22) Date of filing: 07.06.2010
(51) Int. Cl.: B64F 1/22

(54) **Mobilizing apparatus for airplanes**

(30) Priority: 14.06.2009 IL 19933309
(71) Applicant: Ziv-Av Engineering, Ltd., 60905 Be'erot Yitzhak (IL)
(72) Inventor: Ziv-Av, Amir, 55570, Kiryat Ono (IL)
(74) Representative: Modiano, Micaela Nadia

(57) **Abstract**

A mobilizing apparatus is provided for moving an airplane positioned on the ground, wherein the mobilizing apparatus comprises at least one pair of main wheels and engagement means, and is **characterized in that** the engagement means is adapted to enable engagement of the mobilizing apparatus to the airplane central under carriage so that the axis along which the at least one pair of the mobilizing apparatus main wheels is essentially located, is along a virtual axis formed between the central wheels of the airplane to be moved, thereby the mobilizing apparatus main wheels are positioned essentially parallel to the respective airplane central wheels upon engaging the mobilizing apparatus to the airplane to be moved.

## Description

### FIELD OF THE INVENTION

The present invention relates to a wheeled vehicle adapted for mobilizing aircrafts.

### BACKGROUND OF THE INVENTION

Most modern airplanes have reverse thrust capabilities, mainly for assisting them to slow down the planes, and reducing the landing distance, but not for the purpose of moving out of the parking bay. Due to the fact that there are no 'reverse' gears, the airplanes need to be pushed/pulled by a towing vehicle. There are several aircrafts tow-vehicles known in the art. For example, US 5302074 discloses a wheeled vehicle for transporting aircraft on the ground, that includes an engagement and hoisting unit supported by a vehicle chassis. The unit is brought into a position close to the nose wheels of the aircraft, both in front of and behind the contact points between the nose wheels and the ground. The unit is lifted by a cylinder acting between it and the chassis and makes contact with the treads of the nose wheels on both sides of the contact points, raising the nose wheels off the ground, thereby allowing to tow the aircraft.

US 20030165375 discloses a traction vehicle, as well as an engagement and hoisting device, which is **characterized in that** the nose-wheel holder and the stand are shaped as two separate units and comprise members arranged in a circular arc and defining a vertical axis of rotation for these units and that the nose-wheel holder is substantially U-shaped with its opening turned towards the aircraft, when the nose-wheel holder is situated to be moved into a position to receive the nose wheel.

US 6283696 discusses an aircraft towing vehicle that includes a lifting and locking device for the nose landing gear of the aircraft being towed. The device has two support elements which reach behind the nose wheels and can be displaced along straight-line guiding rails by a linear drive so as to pull the nose wheels of the aircraft onto a lifting platform and to lock it into place thereon. At the end of each guiding rail a guiding pin is provided which, in cooperation with a guiding track embodied in the support element, controls the rotation of the support element into a release position in which the nose landing gear is able to pass through.

All the above described tow-vehicles, as well as other tow-vehicles known in the art are attached to the nose wheel(s). Unfortunately, there are several drawbacks associated with this approach, e.g. requirement for a wide steering angel, applying extensive towing load upon the front undercarriage which is not designed for such loads and is sensitive to fatigue effects, etc. Such solutions are not suitable whenever longer towing, for example to the beginning of the runway, is required. In order to accommodate this problem the normal solution is the use of the planes' own engines while taxiing the long distance.

The present invention seeks to provide a solution that eliminates these problems.

### SUMMARY OF THE INVENTION

It is an object of the present invention to provide a mobilizing device for use in moving airplanes either for short distances, e.g. at the airport gate vicinity, and/or for longer distances, e.g. till the start of the runway.

Other objects of the invention will become apparent as the description of the invention proceeds.

According to a first embodiment of the present invention there is provided a mobilizing apparatus for moving an airplane positioned on the ground, wherein the mobilizing apparatus comprises at least one pair of main wheels and engagement means, and is **characterized in that** the engagement means is adapted to enable engagement of the mobilizing apparatus to the airplane so that the axis along which the at least one pair of the mobilizing apparatus main wheels is essentially located, is along an axis formed between the central wheels of the airplane to be moved, so that the mobilizing apparatus main wheels are positioned essentially parallel to a virtual axis or a plurality of virtual axis connecting respective airplane central wheels upon engaging the mobilizing apparatus to the airplane to be moved. Preferably, the mobilizing apparatus is further **characterized in that** once it is engaged to the airplane, there is no substantial steering movement of the mobilizing vehicle relative to the airplane.

According to a preferred embodiment of the invention, the mobilizing apparatus further comprises at least one front wheel. Preferably, the at least one front wheel is a caster wheel. The term "caster wheel" as used herein and throughout the specification and claims, is used to denote a wheel that may be moved in any direction without affecting the direction at which the mobilizing apparatus itself is moving.

By yet another preferred embodiment of the invention, the mobilizing apparatus further comprises harness means to enable harnessing the front portion of the mobilizing apparatus to the airplane's front undercarriage.

According to another preferred embodiment, the mobilizing apparatus is further adapted to allow the airplane and the mobilizing apparatus being engaged thereto, to be steered by a person located at the airplane's cockpit. Preferably, the steering of the airplane and the engaged mobilizing apparatus by the person located at the cockpit is done by steering the airplane front undercarriage.

As will be appreciated by those skilled in the art although the steering of the airplane with the mobilizing apparatus attached thereto is done via the airplane front wheel, still, the load of moving the airplane's major mass is undertaken by the at least one pair of main wheels of the mobilizing apparatus.

According to another preferred embodiment of the invention, the at least one pair of main wheels are jointly driven. By this embodiment the driving force is divided between each of the at least one pair of main wheels in accordance with current driving conditions (e.g. turns to be taken, etc.). Such joint drive could be mechanical differential or hydraulic system (where the supply of the hydraulic fluid is common to all of mobilizing apparatus main wheels), or any other type of joint drive that is known in the art per se.

### BRIEF DESCRIPTION OF THE DRAWINGS

FIG. 1 presents a schematic view illustrating an example of a mobilizing vehicle according to an embodiment of the present invention for moving an airplane positioned on the ground;
FIGs. 2A to 2D demonstrate the use of the mobilizing vehicle for an airplane of the type Boeing 777;
FIG. 3 illustrates another schematic view of an example of another mobilizing vehicle according to an embodiment of the present invention which includes harness attachable to the airplane's front undercarriage; and
FIG. 4 presents yet another example of a mobilizing apparatus encompassed by the present invention.

### DETAILED DESCRIPTION OF THE INVENTION

The present invention will be understood and appreciated more fully from the following detailed example taken in conjunction with the drawings.

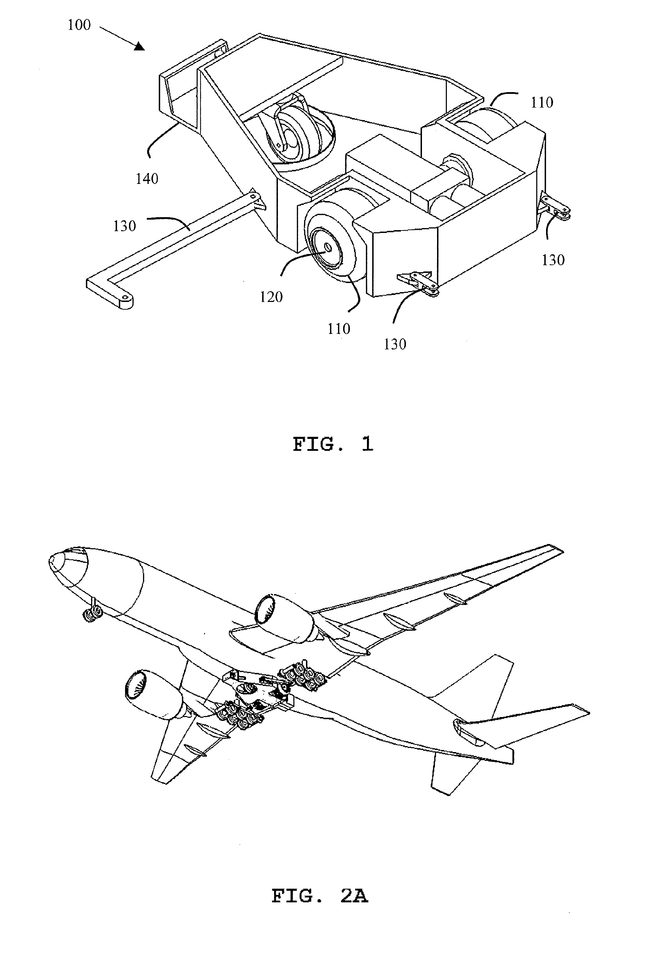

Let us consider now the example illustrated schematically in Fig. 1. Mobilizing vehicle 100 shown in this Fig., comprises two main wheels 110 mounted on an axle 120. The vehicle is adapted to mobilize an airplane positioned on the ground, by having it moved (whether by another towing vehicle or being autonomously driven (e.g. by a driver/operator or by remote control driving, etc.) and located underneath the airplane, so that the vehicle's main wheels 110 are essentially located along an axis formed between the central or back wheels of the airplane. In other words, the mobilizing apparatus main wheels are positioned essentially parallel to the respective airplane central (or back as the case may be) wheels, upon engaging the mobilizing apparatus to the airplane to be moved. Thus, upon engaging the mobilizing vehicle to the airplane, the axis of the mobilizing vehicle main wheels is essentially perpendicular to the longitudinal axis of the airplane. In other words, in a top view, the mobilizing vehicle main wheels' axis is the geometrical line along which the centers of all possible turns which the airplane would take, will be located.

The mobilizing vehicle 100 further comprises engagement means 130 to allow engaging the vehicle to the airplane. The engagement means could be any suitable means that are known in the art *per se,* not necessarily similar to those illustrated in this Fig., but preferably such that would allow 3 degrees of freedom via the airplane's back/rear undercarriage. The can be engaged with the airplane's central undercarriage or to the rear undercarriage as illustrated in the example of this Fig. The mobilizing vehicle main task is to allow the whole system (i.e. the airplane + mobilizing vehicle) to move fast or slow, in the forward or backward direction, while the steering of that system is preferably done from the cockpit by the pilot of the airplane, using the airplane's own steering system. The engagement means are **characterized in that** it allows the engagement of the mobilizing vehicle and the airplane to each other without relative steering motion between the body of the mobilizing vehicle and the airplane.

The mobilizing vehicle may further comprise one or more front wheels (not shown in this Fig.), which are typically caster wheels used primarily to provide required stability for the mobilizing vehicle while being driven.

The mobilizing vehicle may further comprise a driving station 140 for a driver/operator to drive the vehicle.

This arrangement allows moving the airplane for short drives typically of tens of meters (e.g. from its parking position to the airport gate, or to a point at which the airplane starts moving by using its own engines) or for longer drives typically hundreds of meters up to a couple of kilometers or so (e.g. till the start of the runway).

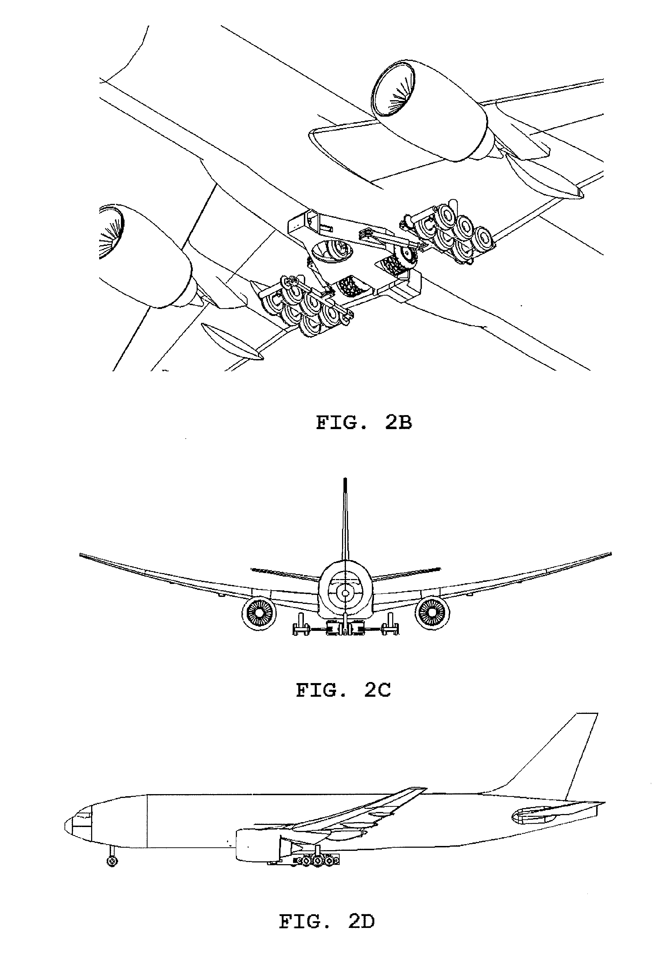

Fig. 2A shows a view of a 777 Boeing airplane, while FIG. 2B illustrates the engagement of the mobilizing vehicle exemplified in Fig. 1 to the airplane. Fig. 2C and 2D illustrate a front view and a side view of a system comprising both the mobilizing vehicle and the airplane and being in engaged position. The engagement may be carried out by applying any method known in the art per se for attaching the mobilizing vehicle either to the airplane undercarriage or to the airplane's wheels arrangement.

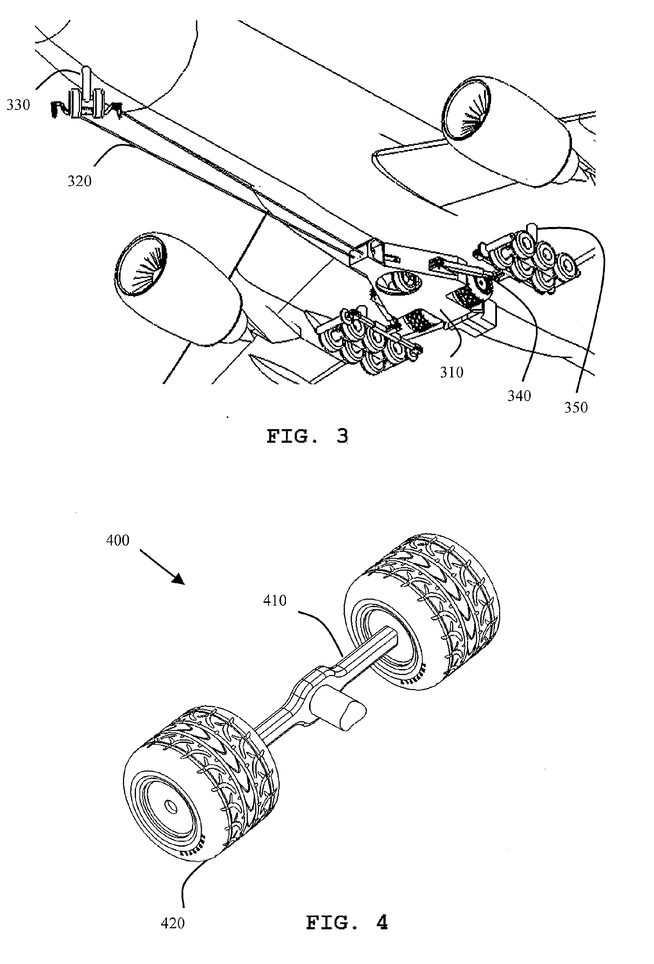

Let us now consider another example as illustrated in Fig. 3. By this example, a vehicle 310 as illustrated in Fig. 1 further comprises harness 320 that is attached to the airplane's front undercarriage 330. Thus, while the mobilizing vehicle engagement means 340 (of which only one side is shown) are locked together with the airplane central undercarriage 350, steering of the airplane by the pilot will cause a steering motion also to mobilizing vehicle 300. In the alternative, the pilot may operate the mobilizing vehicle by using a remote control, or by yet another alternative an operator may drive the mobilizing vehicle while communicating (by wire or wirelessly) with the pilot.

Fig. 4 presents another type of possible mobilizing apparatus 400 constructed in accordance with an embodiment of the present invention. Mobilizing apparatus 400 comprises an axle 410 having to wheels 420 mounted thereon. The arrangement is made so that the wheels are jointly driven. The driving force is divided between each of the two wheels 420 in accordance with current driving conditions (e.g. turns to be taken, etc.). Such joint drive could be mechanical differential or hydraulic differential (where the supply of the hydraulic fluid is common to all of the mobilizing apparatus' main wheels), or any other type of joint drive that is known in the art per se.

It is to be understood that the above description only includes some embodiments of the invention and serves for its illustration. Numerous other ways of carrying out the methods provided by the present invention may be construed by a person skilled in the art without departing from the scope of the invention, and are thus encompassed by the present invention.

## Claims

**1.** A mobilizing apparatus for moving an airplane positioned on the ground, wherein said mobilizing apparatus comprises at least one pair of main wheels and engagement means, and is **characterized in that** the engagement means is adapted to enable engagement of the mobilizing apparatus to the airplane central under carriage so that the axis along which the at least one pair of the mobilizing apparatus main wheels is essentially located, is along a virtual axis formed between the central wheels of the airplane to be moved, thereby the mobilizing apparatus main wheels are positioned essentially parallel to the respective airplane central wheels upon engaging the mobilizing apparatus to the airplane to be moved.

**2.** A mobilizing apparatus according to claim 1, further **characterized in that** once it is engaged to the airplane, there is no substantial steering movement of the mobilizing vehicle relative to the airplane.

**3.** A mobilizing apparatus according to claim 1, further comprising at least one front wheel.

**4.** A mobilizing apparatus according to claim 3, wherein said at least one front wheel is a caster wheel.

**5.** A mobilizing apparatus according to claim 1, further comprising at least one front wheel harness means to enable harnessing a front portion of said mobilizing apparatus to the airplane's front undercarriage.

**8.** A mobilizing apparatus according to claim 1, adapted to allow the airplane and the mobilizing apparatus being engaged thereto, to be steered by a person sitting at the airplane's pilot cockpit.

**7.** A mobilizing apparatus according to claim 1, wherein said at least one pair of main wheels are jointly driven.
